# EUROPÄISCHE PATENTSCHRIFT

(11) **EP 2 019 940 B1**
(45) Veröffentlichungstag und Bekanntmachung des Hinweises auf die Patenterteilung: **29.07.2009**
(21) Anmeldenummer: 07728820.7
(22) Anmeldetag: 04.05.2007
(51) Int. Cl.: F16H 57/02

(54) **ANTRIEBSEINHEIT MIT EINER ANLAUFSCHEIBE SOWIE VERFAHREN ZUM HERSTELLEN EINER SOLCHEN**
DRIVE UNIT HAVING A STOP DISK, AND METHOD FOR PRODUCING THE SAME
UNITÉ D'ENTRAÎNEMENT COMPRENANT UN DISQUE DE BUTÉE ET PROCÉDÉ DE FABRICATION D'UNE TELLE UNITÉ

(30) Priorität: 11.05.2006 DE 102006021986
(43) Veröffentlichungstag der Anmeldung: 04.02.2009
(73) Patentinhaber: Robert Bosch GmbH, 70442 Stuttgart (DE)
(72) Erfinder: LAMPERT, Rico, Farmington Hills, Michigan 48331 (US); HUCK, Thomas, 77836 Rheinmuenster (DE); BUEYUEKASIK, Diyap, 77815 Buehl (DE); MILI, Tarek, 76133 Karlsruhe (DE)
(86) Internationale Anmeldenummer: PCT/EP2007/054367
(87) Internationale Veröffentlichungsnummer: WO 2007/131897

(56) Entgegenhaltungen:
- EP-A1- 0 599 063
- DE-A1- 3 213 418
- DE-A1- 4 218 167
- DE-A1- 10 235 365
- US-A- 3 549 218
- US-A- 5 399 025

## Beschreibung

### Stand der Technik

Die Erfindung betrifft eine Antriebseinheit, insbesondere zum Verstellen beweglicher Teile im Kraftfahrzeug, sowie ein Verfahren zum Herstellen einer solchen mit einer Anlaufscheibe für eine Antriebswelle nach einem der unabhängigen Ansprüche.

Mit der gattungsgemäßen DE 102 35 365 A1 ist ein Verstellantrieb bekannt geworden, bei dem ein Elektromotor eine Ankerwelle antreibt. Auf der Ankerwelle ist eine Schnecke angeordnet, die mit einem Schneckenrad kämmt und an einem Abtriebsritzel ein Abtriebsmoment zur Verfügung stellt. Die Ankerwelle ist an ihren Stirnseiten axial mittels Anlaufscheiben gelagert, gegenüber denen sich die kuppenförmigen Enden der Ankerwelle drehen. Um den Verschleiß der Anlaufscheiben zu minimieren, werden hierbei die kuppenförmigen Enden der Ankerwelle optimiert. Die Anlaufscheiben werden bei diesem Verstellantrieb jeweils axial in entsprechende Aufnahmen im Poltopf oder im Getriebegehäuse montiert. Um die Reibung zwischen den Anlaufkuppen und den Anlaufscheiben zu minimieren, wird in diesen Aufnahmen zur Schmierung Fett deponiert, das in einem zusätzlichen Arbeitsgang eingefügt werden muss. Des Weiteren besteht bei einem solchen Verstellantrieb die Gefahr, dass über die gesamte Lebensdauer des Antriebs an der Reibfläche zwischen der Anlaufscheibe und dem Ankerwellenende nur unzureichend Schmiermittel angeordnet ist. Das hat zur Folge, dass die Anlaufscheiben beschädigt werden können.

### Offenbarung der Erfindung

Die erfindungsgemäße Antriebseinheit und das Herstellungsverfahren mit den kennzeichnenden Merkmalen der unabhängigen Ansprüche haben den Vorteil, dass durch die Ausbildung der Anlaufscheibe mit einem selbstschmierenden Material gewährleistet ist, dass über die gesamte Lebensdauer der Antriebseinheit immer eine zuverlässige Schmierung zwischen der Anlaufscheibe und der Stirnseite der Antriebswelle gegeben ist. Durch die Verwendung des selbstschmierenden Werkstoffs kann das Schmiermittel beispielsweise bei übermäßiger Erwärmung nicht davon fließen. Außerdem entfällt ein zusätzlicher Prozessschritt, mit dem das Schmiermittel bei gewöhnlichen Antriebseinheiten im Bereich der Anlaufscheibe deponiert werden muss.

Durch die in den abhängigen Ansprüchen aufgeführten Maßnahmen sind vorteilhafte Weiterbildungen und Verbesserungen der in den unabhängigen Ansprüchen angegebenen Merkmale möglich. Weist der selbstschmierende Werkstoff eine Kunststoffmatrix auf, kann in dieser der Schmierstoff zuverlässig eingelagert werden. Durch die Integration des Schmiermittels in die Matrix des Trägerwerkstoffs kann in sehr einfacher Weise garantiert werden, dass sich der Schmierstoff im Betrieb nicht verflüchtigt.

Besonders günstig kann eine solche selbstschmierende Anlaufscheibe mittels Spritzgussverfahren hergestellt werden, da hierbei in einem Arbeitsschritt das Schmiermittel gleichmäßig über das gesamte Volumen der Anlaufscheibe in die Kunststoffmatrix eingebaut wird. Dadurch wird nicht nur die Oberfläche der Anlaufscheibe geschmiert, sondern es ist auch bei einem möglichen Abrieb der Anlaufscheibe im Inneren der Anlaufscheibe immer Schmiermittel an der Reibfläche vorhanden.

Von Vorteil ist es, als Schmiermittel Teflon oder Graphit in die Matrix der Anlaufscheibe einzulagern, weil diese besonders gut in der Matrix gehalten werden können und gleichzeitig sehr gute Schmiereigenschaften aufweisen.

Die Montage der Antriebseinheit wird besonders günstig, wenn sowohl die Antriebswelle über ihre gesamte Länge als auch die Anlaufscheiben radial zur Ankerwelle in ein Gehäuseteil montiert werden können. Dabei werden die Anlaufscheiben vorteilhaft mit dem radialen Verschließen des Gehäuses in entsprechenden Aufnahmen befestigt.

Damit sich die Anlaufscheibe nicht mit der Antriebswelle dreht, weist die Anlaufscheibe über ihren Umfang ein Vielkant-Profil auf, das mit einem korrespondierenden Vielkant-Profil der Aufnahme einen Formschluss bildet. Dabei ist das Vielkant-Profil besonders einfach als Vierkant auszubilden.

Werden an der Anlaufscheibe Einführphasen angeformt, die beim Einführen mit entsprechenden Phasen der Aufnahmen im Gehäuse zusammenwirken, wird die radiale Montage der Anlaufscheiben deutlich vereinfacht.

Besonders vorteilhaft ist die Verwendung der selbstschmierenden Anlaufscheiben für eine Ankerwelle mit einem Schneckengetriebe, da hierbei große axiale und radiale Kräfte auf die Enden der Ankerwelle einwirken.

Wird der Antrieb in beiden Drehrichtungen betrieben, treten an beiden Stirnseiten der Antriebswelle hohe axiale Belastungen auf, so dass zwei identische Anlaufscheiben an beiden Stirnseiten der Antriebswelle montiert werden können, wodurch der Montageprozess kostengünstiger wird.

Ist das Gehäuse schalenförmig ausgebildet, so dass die Antriebswelle über ihre gesamte Länge radial in ein erstes Gehäuseteil montiert werden kann, können auch die beiden selbstschmierenden Anlaufscheiben in gleicher Montagerichtung eingesetzt werden. Durch die Verwendung der selbstschmierenden Anlaufscheibe wird vorteilhaft ein zusätzlicher Montageschritt des Fettens der Anlaufscheiben eingespart.

In der Zeichnung sind Ausführungsbeispiele der erfindungsgemäßen Vorrichtung dargestellt und in der nachfolgenden Beschreibung näher erläutert. Es zeigen
- Figur 1: eine Ansicht einer erfindungsgemäßen Antriebseinheit in geöffnetem Zustand und
- Figur 2: die Montage einer Anlaufscheibe im Detail.

### Beschreibung der Ausführungsbeispiele

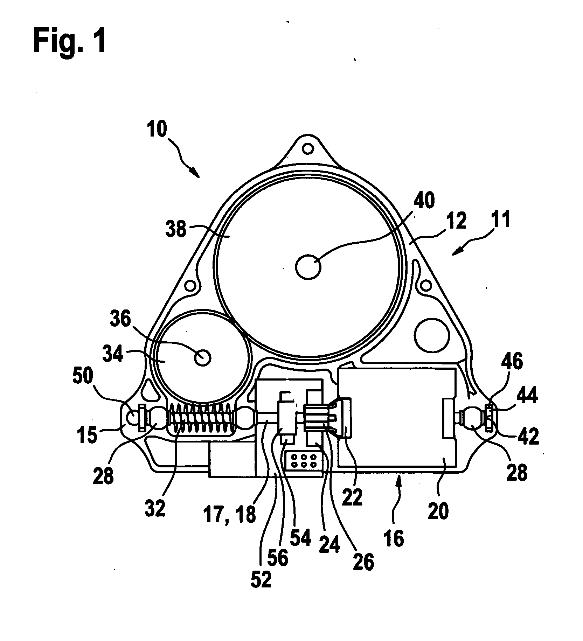

Figur 1 zeigt eine Antriebseinheit 10, bei der in einem ersten Gehäuseteil 12 eines Gehäuses 11 ein Elektromotor 16 mit einer Antriebswelle 17 angeordnet ist. Der Elektromotor 16 weist drehfest im Gehäuse 11 angeordnete Permanentmagneten 20 auf, die einen Anker 22 in Drehung versetzen. Der Anker 22 wird mittels Bürsten 24 über einen Kollektor 26 kommutiert. Im Bereich des Kollektors 26 ist eine Elektronikeinheit 52 angeordnet, die mit einem Sensorsystem 54 ein Positionssignal eines Signalgebers 56 erfasst. Auf der als Ankerwelle 18 ausgebildeten Antriebswelle 17 sind Lager 28 angeordnet, die beispielsweise direkt in entsprechende Lageraufnahmen 30 im Gehäuse 11 eingefügt sind. Die Ankerwelle 18 weist des Weiteren eine Schnecke 32 auf, die mit einem Schneckenrad 34 in Eingriff steht, das auf einer ersten Lagerachse 36 angeordnet ist. In einer weiteren Getriebestufe wird das Drehmoment vom Schneckenrad 34 auf ein Abtriebselement 38 übertragen, das auf einer zweiten Achse 40 gelagert ist. Die Antriebswelle 17 ist über ihre gesamte Länge radial in das erste Gehäuseteil 12 eingesetzt. An ihren Enden weist die Antriebswelle 17 Stirnseiten 42 auf, die jeweils an Anlaufscheiben 44 anliegen. Die Anlaufscheiben 44 sind ebenfalls radial in Aufnahmen 46 eingefügt, die im Ausführungsbeispiel direkt als Taschen 48 im Gehäuse 11 ausgebildet sind. Die Anlaufscheiben 44 weisen einen polygonalen Umfang 62 auf, der mit dem Gehäuse 11 eine Drehsicherung der Anlaufscheibe 44 bildet. Die Anlaufscheiben 44 sind aus einem selbstschmierenden Werkstoff 49 hergestellt, bei dem ein Schmierstoff direkt in eine Matrixstruktur der Anlaufscheibe 44 eingebaut ist. Das Trägermaterial, das eine Matrix bildet, ist beispielsweise ein Polyamid-Kunststoff, in den als Schmierstoff Teflon (PTFE) oder Graphit integriert ist. Des Weiteren können auch Silikon, Molybdändisulfid oder ähnliche Schmierstoffe gleichmäßig über das gesamte Volumen der Anlaufscheibe 44 in das Trägermaterial eingebaut sein. Die selbstschmierende Anlaufscheibe 44 wird bevorzugt mittels eines Kunststoffspritzguss-Verfahrens hergestellt, bei dem schon das verwendete Granulat eine Mischung des Trägermaterials aus Kunststoff und den entsprechenden Schmierstoffen bildet. Die Antriebswelle 17 ist beispielsweise aus Stahl gefertigt, so dass auch ohne Einbringen von zusätzlichen Schmiermitteln nur eine minimale Reibung zwischen den Stirnflächen 42 und den Anlaufscheiben 44 auftritt. Um das Axialspiel auszugleichen, ist im Ausführungsbeispiel zwischen einer Gehäusewand 15 und der der Stirnseite 42 abgewandten Seite der Anlaufscheibe 44 ein Dämpfungselement 50 angeordnet, das bei der Montage vorgespannt wird.

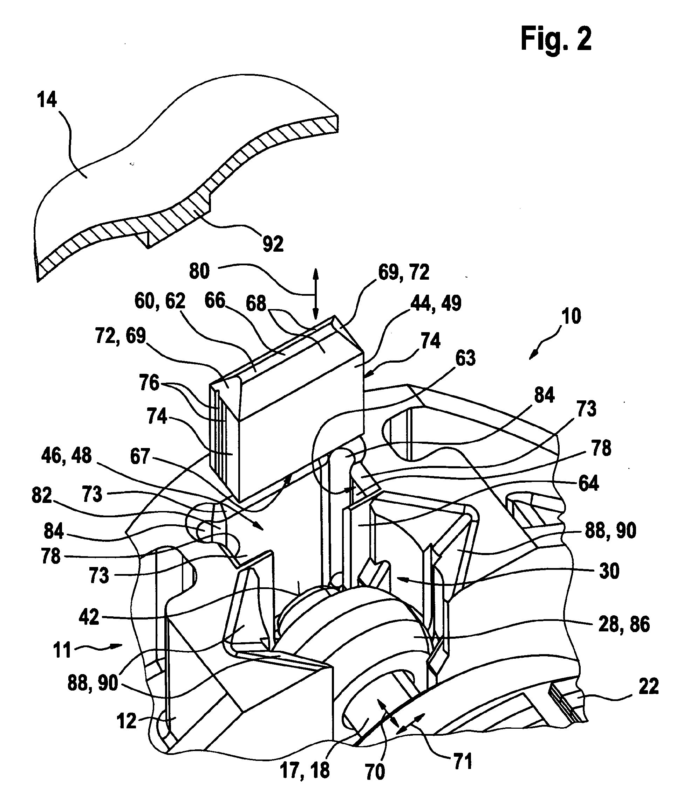

In Figur 2 ist ein vergrößerter Ausschnitt einer weiteren Antriebseinheit 10 dargestellt, wobei zur besseren Anschauung die Anlaufscheibe 44 noch nicht montiert ist. Die Anlaufscheibe 44 ist hier näherungsweise als Vielkant 60 mit einem polygonalen Umfang 62 ausgebildet, der einen Formschluss mit der entsprechenden Polygonausformung 63 der Aufnahme 46 des Gehäuses 11 bildet. Im konkreten fall ist der Vielkant 60 als Vierkant 58 mit in etwa rechteckförmigem Umfang 62 ausgebildet. Die Aufnahme 46 weist axiale Wandabschnitte 64 auf, so dass die Anlaufscheibe 44 auch einen axialen Formschluss mit dem Gehäuse 11 bildet. Die Anlaufscheibe 44 weist an ihrer oberen Seite 66 und an ihrer unteren Seite 67 jeweils eine Einführphase 68 auf, die bezüglich der axialen Richtung 70 abgeschrägt ist. Als weitere Einführphasen 69 sind auch in einer Richtung 71 quer zur Antriebswelle 17 abgeschrägte Flächen 72 ausgebildet, die ein Einführen in die Tasche 48 erleichtern. Zusätzlich sind an der Aufnahme 46 korrespondierende abgeschrägte Einführflächen 73 ausgebildet, so dass bei radialer Montage der Anlaufscheibe 44 diese auch mit großen Montagetoleranzen zuverlässig in die Aufnahmen 46 eingeführt wird. Zur Fixierung in Querrichtung 71 sind an den Seitenflächen 74 der Anlaufscheibe 44 Einklemmkanten 76 angeformt, die sich an den gegenüberliegenden Seitenwänden 78 der Aufnahme 46 abstützen. An der Aufnahme 46 sind an den Kanten 82 entlang der Radialrichtung 80 Aussparungen 84 ausgeformt, die ein Verkanten der Anlaufscheibe 44 bei deren radialer Montage verhindern.

Die Lager 28 sind im Ausführungsbeispiel als Kalottenlager 86 ausgebildet, die ebenfalls in radialer Richtung 80 in die Lageraufnahme 30 eingesetzt werden. Hierzu weist die Lageraufnahme 30 als Einführhilfe 88 abgeschrägte Flächen 90 auf, die das Kalottenlager 86 bei dessen radialer Montage in die Lageraufnahme 30 gleiten lassen.

Bei dem erfindungsgemäßen Herstellungsverfahren werden sowohl die Anlaufscheiben 44 als auch die Antriebswelle 17 mit den Lagern 28 in Radialrichtung 80 in das erste schalenförmige Gehäuseteil 12 eingesetzt. Anschließend wird das erste Gehäuseteil 12 mit einem als Deckel ausgebildeten zweiten Gehäuseteil 14 verschlossen. Dabei drückt das zweite Gehäuseteil 14 die Anlaufscheiben 44 radial in die entsprechenden Aufnahmen 46. Dazu sind beispielsweise am zweiten Gehäuseteil 14 Anschlagselemente 92 angeordnet, die in Radialrichtung 71 an der Anlaufscheibe 44 anliegen. Gleichzeitig werden dabei optional die Lager 28 durch das zweite Gehäuseteil 14 in die entsprechenden Lageraufnahmen 30 gepresst.

Es sei angemerkt, dass hinsichtlich der in den Figuren und der Beschreibung dargestellten Ausfiihrungsbeispiele vielfältige Kombinationsmöglichkeiten der einzelnen Merkmale untereinander möglich sind. So kann beispielsweise die konkrete Ausformung der formschlüssigen Drehsicherung variiert werden, indem der polygonale Umfang 62 beispielsweise auch als Dreikant, Fünfkant oder Sechskant ausgebildet wird. Alternativ kann dieser Formschluss aber auch gewölbte Umfangsflächen, beispielsweise ein Oval, aufweisen. Ebenso können die Einführphasen 68, 69 bzw. die abgeschrägten Flächen 73 der Aufnahme 46 den Montageanforderungen angepasst werden. Die Erfindung ist ebenso nicht auf die Verwendung von Kalottenlagern 86 oder einem Schneckengetriebe beschränkt, wird aber bevorzugt für Verstellantriebe im Kraftfahrzeug, beispielsweise für Fensterheber, Schiebedach oder Sitzverstellungen, angewendet.

## Patentansprüche

1. Antriebseinheit (10), insbesondere zum Verstellen beweglicher Teile im Kraftfahrzeug, mit einer Antriebswelle (17) aus Metall, die mittels mindestens einem radialen Lagerelement (28) in einem Gehäuse 11) gelagert ist, wobei die Antriebswelle (17) zwei Stirnseiten (42) aufweist, von denen sich mindestens eine als Axialanlauf über eine Anlaufscheibe (44) am Gehäuse (11) abstützt, **dadurch gekennzeichnet, dass** die Anlaufscheibe (44) aus einem selbstschmierenden Werkstoff (49) hergestellt ist, der den Axialanlauf über die gesamte Lebensdauer der Antriebseinheit (10) ohne Verwendung von zusätzlichen, separaten Schmiermitteln schmiert.

2. Antriebseinheit (10) nach Anspruch 1, **dadurch gekennzeichnet, dass** der Werkstoff (49) der Anlaufscheibe (44) eine Kunststoffinatrix aufweist, in die ein Schmierstoff integriert ist.

3. Antriebseinheit (10) nach Ansprüch 2, **dadurch gekennzeichnet, dass** der Schmierstoff mittels Spritzguss-Verfahren über das gesamte Volumen der Anlaufscheibe (44) in die Kunststoffmatrix eingelagert ist.

4. Antriebseinheit (10) nach einem der Ansprüche 2 oder 3, **dadurch gekennzeichnet, dass** als Schmierstoff Teflon oder Graphit in die Anlaufscheibe (44) integriert ist.

5. Antriebseinheit (10) nach einem der vorhergehenden Ansprüche, **dadurch gekennzeichnet, dass** das Gehäuse (11) ein erstes Gehäuseteil (12) und ein zweites Gehäuseteil (14) aufweist, die radial zur Antriebswelle (17) zusammenfügbar sind, wobei das Gehäuse (11) eine taschenförmige Aufnahme (46) aufweist, in die die Anlaufscheibe (44) radial montierbar ist, und - insbesondere mittels eines radialen Fortsatzes (92) des zweiten Gehäuseteils (14) - in die Aufnahme (46) eindrückbar ist.

6. Antriebseinheit (10) nach Ansprüch 5, **dadurch gekennzeichnet, dass** die Anlaufscheibe (44) über ihren Umfang eine polygonale Geometrie (62), insbesondere im Wesentlichen einen Vierkant (60) aufweist, die als Drehsicherung einen Formschluss mit einer korrespondierenden Geometrie (63) der Aufnahmen (46) bildet.

7. Antriebseinheit (10) nach einem der Ansprüche 5 or 6, **dadurch gekennzeichnet, dass** die Anlaufscheibe (44) mindestens eine Einführfase (68, 69) aufweist, die die Anlaufscheibe (44) bei der Montage in die Aufnahme (46) sowohl in axialer Richtung 70 als auch quer zur Antriebswelle (17) zentriert.

8. Antriebseinheit (10) nach einem der vorhergehenden Ansprüche, **dadurch gekennzeichnet, dass** die Antriebswelle (17) als Ankerwelle (18) eines Elektromotors (16) ausgebildet ist, auf der insbesondere eine Schnecke (32) für den Eingriff in ein Schneckenrad (34) angeordnet ist.

9. Antriebseinheit (10) nach einem der Ansprüche 5, 6 oder 7, **dadurch gekennzeichnet, dass** die Antriebswelle (17) reversierbar ausgebildet ist, und über ihre gesamte Länge zwischen den beiden Gehäuseteilen (12, 14) angeordnet ist, wobei an den Stirnseiten (42) jeweils identische Anlaufscheiben (44) in identischen Aufnahmen (46) angeordnet sind.

10. Verfahren zum Herstellen einer Antriebseinheit (10), insbesondere nach einem der vorhergehenden Ansprüche, mit mindestens einem unteren Gehäuseteil (12) und einem oberen Gehäuseteil (14) und einer Antriebswelle (17), die mittels mindestens einer Anlaufscheibe (44) in den Gehäuseteilen (12, 14) gelagert ist, **gekennzeichnet durch** folgende Montageschritte:
- die mindestens eine Anlaufscheibe (44) ist selbstschmierend ausgebildet und wird radial in eine Aufnahme (46) des unteren Gehäuseteils (12) unter Bildung eines Formschlusses bzgl. der Umfangsrichtung eingesetzt
- die Antriebswelle (17) wird mit mindestens einem Lagerelement (28) radial in das untere Gehäuseteil (12) eingesetzt, derart, dass mindestens eine Stirnseite (42) der Antriebswelle (17) an der mindestens einen Anlaufscheibe (44) anliegt, wobei kein separates Schmiermittel deponiert wird
- das obere Gehäuseteil (14) wird radial auf das untere Gehäuseteil (12) aufgesetzt und mit diesem verbunden, wobei die Anlaufscheibe (44) in die Aufnahme (46) gepresst wird, um die Anlaufscheibe (44) zu fixieren.

## Claims

1. Drive unit (10), in particular for adjusting movable parts in a motor vehicle, with a metal drive shaft (17) which is mounted in a housing (11) by means of at least one radial bearing element (28), wherein the drive shaft (17) has two end sides (42), of which at least one is supported as an axial stop on the housing (11) via a stop disc (44), **characterized in that** the stop disc (44) is produced from a self-lubricating material (49) which lubricates the axial stop throughout the service life of the drive unit (10) without the use of additional, separate lubricants.

2. Drive unit (10) according to Claim 1, **characterized in that** the material (49) of the stop disc (44) has a plastic matrix in which a lubricating substance is integrated.

3. Drive unit (10) according to Claim 2, **characterized in that** the lubricating substance is embedded in the plastic matrix over the entire volume of the stop disc (44) by means of injection moulding.

4. Drive unit (10) according to either of Claims 2 and 3, **characterized in that** Teflon or graphite is integrated in the stop disc (44) as the lubricating substance.

5. Drive unit (10) according to one of the preceding claims, **characterized in that** the housing (11) has a first housing part (12) and a second housing part (14) which can be joined together radially with respect to the drive shaft (17), the housing (11) having a pocket-shaped receptacle (46) into which the stop disc (44) can be radially fitted and - in particular by means of a radial extension (92) of the second housing part (14)
- can be pressed into the receptacle (46).

6. Drive unit (10) according to Claim 5, **characterized in that** the stop disc (44) has a polygonal geometry (62) over its extent, in particular essentially a square (60) which, as means of securing against rotation, forms an interlocking connection with a corresponding geometry (63) of the receptacle (46).

7. Drive unit (10) according to either of claims 5 and 6, **characterized in that** the stop disc (44) has at least one insertion bevel (68, 69) which centres the stop disc (44) both in the axial direction (70) and transversely with respect to the drive shaft (17) during the insertion into the receptacle (46).

8. Drive unit (10) according to one of the preceding claims, **characterized in that** the drive shaft (17) is designed as an armature shaft (18) of an electric motor (16), on which in particular a worm (32) for engagement in a worm wheel (34) is arranged.

9. Drive unit (10) according to one of Claims 5, 6 and 7, **characterized in that** the drive shaft (17) is of reversible design and is arranged over its entire length between the two housing parts (12, 14), with in each case identical stop discs (44) being arranged in identical receptacles (46) on the end sides (42).

10. Method for producing a drive unit (10), in particular according to one of the preceding claims, with at least one lower housing part (12) and an upper housing part (14) and a drive shaft (17) which is mounted in the housing parts (12, 14) by means of at least one stop disc (44), **characterized by** the following installation steps:
- the at least one stop disc (44) is of self-lubricating design and is inserted radially into a receptacle (46) of the lower housing part (12) with an interlocking connection with regard to the circumferential direction being formed,
- the drive shaft (17) is inserted radially into the lower housing part (12) by means of at least one bearing element (28) in such a manner that at least one end side (42) of the drive shaft (17) bears against the at least one stop disc (44), with no separate lubricant being deposited,
- the upper housing part (14) is placed radially onto the lower housing part (12) and is connected thereto, the stop disc (44) being pressed into the receptacle (46) in order to fix the stop disc (44).

## Revendications

1. Unité d'entraînement (10), notamment pour déplacer des pièces mobiles dans un véhicule automobile, comprenant un arbre d'entraînement (17) en métal, qui est monté au moyen d'au moins un élément de palier radial (28) dans un boîtier (11), l'arbre d'entraînement (17) présentant deux côtés frontaux (42) dont au moins un s'appuie sous forme de butée axiale par le biais d'un disque de butée (44) contre le boîtier (11), **caractérisée en ce que** le disque de butée (44) se compose d'un matériau auto-lubrifiant (49) qui lubrifie la butée axiale sur toute la durée de vie de l'unité d'entraînement (10) sans devoir utiliser de lubrifiants séparés supplémentaires.

2. Unité d'entraînement (10) selon la revendication 1, **caractérisée en ce que** le matériau (49) du disque de butée (44) présente une matrice en plastique dans laquelle est intégré un lubrifiant.

3. Unité d'entraînement (10) selon la revendication 2, **caractérisée en ce que** le lubrifiant est incorporé au moyen d'un procédé de moulage par injection sur tout le volume du disque de butée (44) dans la matrice en plastique.

4. Unité d'entraînement (10) selon l'une quelconque des revendications 2 ou 3, **caractérisée en ce que** l'on intègre dans le disque de butée (44) en tant que lubrifiant du téflon ou du graphite.

5. Unité d'entraînement (10) selon l'une quelconque des revendications précédentes, **caractérisée en ce que** le boîtier (11) présente une première partie de boîtier (12) et une deuxième partie de boîtier (14), qui peuvent être assemblées radialement à l'arbre d'entraînement (17), le boîtier (11) présentant un logement (46) en forme de poche dans lequel le disque de butée (44) peut être monté radialement, et peut être enfoncé dans le logement (46), notamment au moyen d'une saillie radiale (92) de la deuxième partie du boîtier (14).

6. Unité d'entraînement (10) selon la revendication 5, **caractérisée en ce que** le disque de butée (44) présente sur toute sa périphérie une géométrie polygonale (62), notamment essentiellement un carré (60), qui forme en vue d'une immobilisation en rotation, un engagement positif avec une géométrie correspondante (63) du logement (46).

7. Unité d'entraînement (10) selon l'une quelconque des revendications 5 ou 6, **caractérisée en ce que** le disque de butée (44) présente au moins un biseau d'insertion (68, 69), qui centre le disque de butée (44) lors du montage dans le logement (46) à la fois dans la direction axiale (70) et dans la direction transversale à l'arbre d'entraînement (17).

8. Unité d'entraînement (10) selon l'une quelconque des revendications précédentes, **caractérisée en ce que** l'arbre d'entraînement (17) est réalisé sous forme d'arbre d'induit (18) d'un moteur électrique (16), sur lequel en particulier une vis sans fin (32) est disposée de manière à venir en prise dans une roue à denture hélicoïdale (34).

9. Unité d'entraînement (10) selon l'une quelconque des revendications 5, 6 ou 7, **caractérisée en ce que** l'arbre d'entraînement (17) est réalisé sous forme réversible, et est disposé sur toute sa longueur entre les deux parties de boîtier (12, 14), des disques de butée identiques (44) étant disposés sur les côtés frontaux (42) dans des logements identiques (46).

10. Procédé de fabrication d'une unité d'entraînement (10), en particulier selon l'une quelconque des revendications précédentes, comprenant au moins une partie de boîtier inférieure (12) et une partie de boîtier supérieure (14) et un arbre d'entraînement (17), qui est monté au moyen d'au moins un disque de butée (44) dans les parties de boîtier (12, 14), **caractérisé par** les étapes de montage suivantes :
- l'au moins un disque de butée (44) est réalisé de manière auto-lubrifiante et est inséré radialement dans un logement (46) de la partie inférieure du boîtier (12) en formant un engagement positif par rapport à la direction périphérique,
- l'arbre d'entraînement (17) est inséré avec au moins un élément de palier (28) radialement dans la partie de boîtier inférieure (12) de telle sorte qu'au moins un côté frontal (42) de l'arbre d'entraînement (17) s'applique contre l'au moins un disque de butée (44), aucun moyen de lubrification séparé n'étant déposé,
- la partie supérieure du boîtier (14) est posée radialement sur la partie inférieure du boîtier (12) et est connectée à celle-ci, le disque de butée (44) étant pressé dans le logement (46) afin de fixer le disque de butée (44).
